# FASCICULE DE BREVET EUROPEEN

(11) **EP 2 650 600 B1**
(45) Date de publication et mention de la délivrance du brevet: **18.11.2020**
(21) Numéro de dépôt: 13162706.9
(22) Date de dépôt: 08.04.2013
(51) Int. Cl.: F21V 8/00, F21S 43/237, F21S 43/245, F21S 43/249

(54) **Guide optique pour dispositif d'émission de lumière de véhicule automobile**
Lichtwellenleiter für eine Leuchtvorrichtung eines Kraftfahrzeugs
Lightguide for a light-emitting device of a motor vehicle

(30) Priorité: 11.04.2012 FR 1253286
(43) Date de publication de la demande: 16.10.2013
(73) Titulaire: VALEO VISION, 93012 Bobigny Cedex (FR)
(72) Inventeur: Germon, François, 49320 Saint Saturnin Sur Loire (FR)
(74) Mandataire: Valeo Vision

(56) Documents cités:
- WO-A1-00/41009
- DE-A1-102008 034 052
- US-A1- 2010 128 187
- US-A1- 2011 169 428

## Description

La présente invention est relative notamment à un guide optique utilisable pour l'émission de lumière. Une application préférée concerne l'industrie automobile pour la réalisation de dispositifs de signalisation et/ ou d'éclairage, notamment de projecteurs de véhicule.

Dans ce dernier domaine, l'emploi de guides optiques s'est fortement développé ces dernières années. Il s'agit généralement d'éléments sensiblement allongés dans le cas de guides linéaires, en matière transparente avec une section circulaire. Le guide coopère le plus souvent avec une source lumineuse placée à l'une de ses extrémités. Cet ensemble permet de propager des rayons lumineux dans le guide, en direction de l'extrémité du guide longitudinalement opposée à la source par réflexion interne sur les surfaces du guide. Le long du guide, une surface de réflexion dotée de prismes permet de réfléchir certains rayons de manière à ce qu'ils se propagent dans le guide et d'autres rayons avec une incidence telle qu'il sorte du guide. Ainsi progressivement le long du guide, les rayons sont réfléchis de manière à sortir du guide. La surface de réflexion dotée de prismes est ainsi conçue de sorte à générer un faisceau sortant, par une face du guide dite de sortie. Un intérêt majeur de tels guides est que leur forme peut varier, par exemple avec une courbure le long du guide, tout en conservant un aspect homogène de l'émission de lumière produite le long du guide alors même que la source est située à une extrémité.

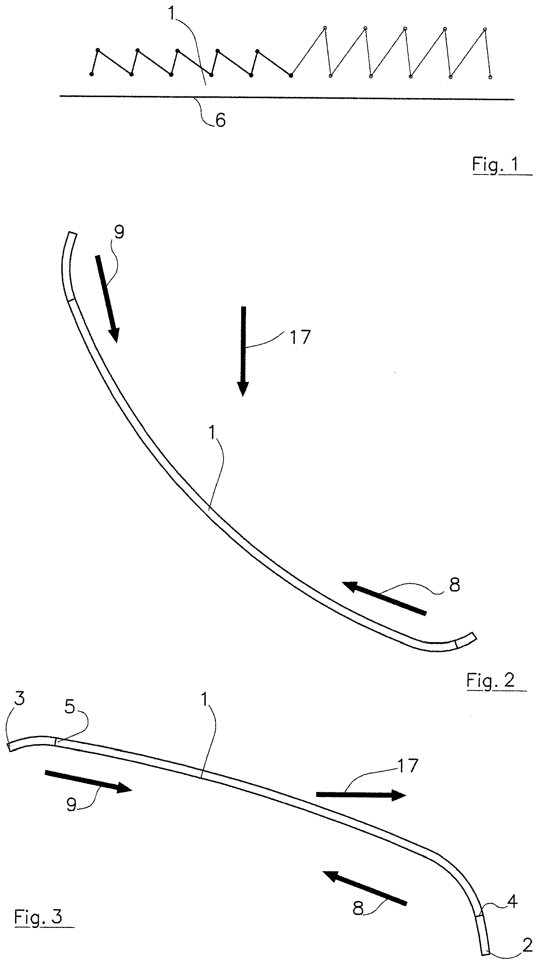

Cet avantage a incité les stylistes à concevoir des dispositifs d'émission de lumière mettant en jeu des guides fort incurvés ou encore intégrés dans des projecteurs avec des retours d'aile important. On a par ailleurs développé des dispositifs comprenant deux sources lumineuses, chacune à une extrémité du guide. C'est particulièrement le cas lorsque la longueur du guide est importante. Dans ce cas de figure, le guide est divisé en deux parties : sensiblement la moitié de la longueur du guide comporte des prismes dédiés à la réflexion des rayons d'une des sources (celle située de leur côté du guide), et l'autre moitié de guide comprend des prismes assurant la réflexion des rayons issus de la deuxième source. La figure 1 en est une illustration.

L'utilisation, pour un même guide, de deux sources lumineuses est problématique en termes d'homogénéité du faisceau sortant le long du guide. Spécialement, on constate une discontinuité d'apparence au niveau de la zone de jonction entre les deux parties de guide. Ce problème est accru lorsque le guide est fortement incurvé et particulièrement quand l'une des deux sources lumineuse est fort décalée angulairement relativement à l'axe optique.

L'invention permet de résoudre cet inconvénient.

Le document DE102008034052 décrit un guide de lumière avec deux sources lumineuses mais avec une succession de paires de prismes. Au sein d'une paire de prismes, les prismes sont différents. Ces paires de prismes constituent un motif se répétant le long de la face arrière du guide, avec un pas donné. L'homogénéité de ce guide est néanmoins perfectible.

Un aspect de l'invention est relatif à un guide optique linéaire pour dispositif d'éclairage et/ou de signalisation, comprenant :
- une première extrémité et une deuxième extrémité aptes à admettre dans le guide respectivement un premier flux lumineux et un deuxième flux lumineux ;
- une face de sortie d'un faisceau lumineux ;
- une deuxième face, opposée à la face de sortie, comprenant une pluralité de prismes se succédant suivant une direction longitudinale du guide, et configurée pour réfléchir des rayons du premier flux lumineux et du deuxième flux lumineux vers la face de sortie.

Ce guide est tel qu'au moins un prisme est complexe et comprend un premier côté configuré pour réfléchir les rayons du premier flux lumineux vers la face de sortie et un deuxième côté comprenant deux pans avec :
- un premier pan configuré pour réfléchir des rayons du deuxième flux lumineux vers la face de sortie,
- un deuxième pan configuré pour dévier des rayons du premier flux lumineux vers l'intérieur du guide.

On entend par prisme complexe le fait que le prisme n'est pas simplement triangulaire comme dans un cas usuel. Le premier pan et le deuxième pan forment un angle obtus rentrant et sont directement jointifs, le deuxième pan étant situé au dessus du premier pan en direction de l'extérieur du guide. Grâce à cette configuration de prisme, deux dioptres, chacun formé par une partie de la surface du prisme, assurent la réflexion de lumière, chacun pour un des flux. Dans le même temps, des rayons qui seraient amenés à sortir définitivement du guide lors de leur propagation sont déviés par un pan supplémentaire du prisme de sorte à être réintroduits dans le guide. On comprend qu'avec de tels prismes, il y a une meilleure homogénéité de luminosité sur la face de sortie.

Le résultat obtenu par l'invention est tel que l'on peut l'employer pour des guides dont l'émission lumineuse d'une des sources s'effectue dans une direction sensiblement opposée à celle de l'axe optique alors qu'une telle configuration serait considérée comme exclue dans l'état de la technique.

Un autre avantage de l'invention est que, de manière surprenante, l'absence de discontinuité se constate aussi alors que les sources lumineuses sont éteintes. En effet, la présence de deux pans sur l'un des côtés du prisme favorise un aspect éteint homogène du guide.

Le deuxième pan est situé au dessus du premier pan en direction de l'extérieur du guide. Le premier pan et le deuxième pan forment un angle obtus. Ainsi, le deuxième pan constitue une partie sommitale du prisme servant à prolonger sa hauteur pour constituer une zone de déviation de rayons sortant du guide. On récupère ainsi des rayons normalement perdus. Le premier pan et le deuxième pan formant un angle, ils sont donc directement jointifs. Ainsi le premier pan et le deuxième pan forment deux surfaces continues, pouvant par exemple se joindre en une arrête. La continuité entre les premier et deuxième pans permet d'avoir un pas de prisme inférieur au pas des motifs se répétant dans les guides de l'art antérieur, notamment le pas des paires de prismes du guide de DE102008034052, améliorant ainsi l'homogénéité de l'aspect allumé du guide. En effet, les arrêtes de prismes sont souvent légèrement apparentes dans l'aspect d'un guide allumé et se manifestent par des lignes de surintensité. Avec des pans continus et en diminuant le pas de prisme selon l'invention, ces lignes seront d'égales intensités et plus rapprochées, diminuant ainsi le contraste entre ces lignes. De plus, cela permet une augmentation du ratio hauteur du prisme par rapport au pas du prisme, ce qui permet de récupérer plus de flux. Par pas de prisme, on entend la largeur du prisme complexe.

Le premier pan et le deuxième pan forment un angle obtus rentrant.

Selon d'autres cas optionnels, le dispositif est tel que :
- il comporte une pluralité de prismes complexes se succédant le long d'une portion de la longueur du guide s'étendant à partir de la première extrémité du guide.
- la hauteur du deuxième pan des prismes complexes est croissante en direction de la première extrémité.
- la croissance de la hauteur du deuxième pan des prismes complexes est progressive et peut être linéaire.
- la croissance de la hauteur du deuxième pan des prismes complexes débute d'une valeur de hauteur nulle.
- il comporte une portion de la longueur du guide s'étendant à partir de la deuxième extrémité et comprenant des prismes triangulaires se succédant le long de ladite portion.
- la portion de la longueur du guide s'étendant à partir de la deuxième extrémité et la portion de la longueur du guide s'étendant à partir de la première extrémité du guide se rejoignent sans discontinuité de variation de hauteur des prismes. Par exemple, ces deux portions se rejoignent là où la croissance de la hauteur du deuxième pan des prismes complexes débute d'une valeur de hauteur nulle.
- le ratio de la hauteur du deuxième pan sur la hauteur du premier pan des prismes complexes est croissant en direction de la première extrémité
- il est configuré pour générer un faisceau lumineux suivant un axe optique et dans lequel l'angle formé entre l'axe optique et la direction d'entrée dans le guide du premier flux lumineux est supérieur à l'angle formé entre l'axe optique et la direction d'entrée dans le guide du deuxième flux lumineux. Le faisceau lumineux émis est réparti autour d'une direction appelée direction globale, correspondant dans cette demande à l'axe optique.
- l'angle formé entre l'axe optique et la direction d'entrée dans le guide du premier flux lumineux est supérieur à 90°.

On notera que le guide ici proposé permet dans des cas avantageux d'assurer une continuité d'aspect malgré des variations de géométrie des prismes selon sa longueur.

L'invention est aussi relative à un dispositif d'éclairage et/ou de signalisation notamment pour véhicule automobile comportant un guide optique linéaire tel qu'indiqué ci-dessus.

D'autres caractéristiques, buts et avantages de la présente invention apparaitront à la lecture de la description détaillée qui suit, et en regard des dessins annexés donnés à titre d'exemples non limitatifs et sur lesquels :
- la figure 1 évoquée ci-dessus montre un cas classique de configuration prismatique de la face arrière d'un guide optique linéaire.
- la figure 2 illustre une vue de dessus d'un guide de l'invention.
- la figure 3 montre une vue de profil de ce même guide.
- la figure 4 présente un exemple de l'invention avec une variation progressive de la forme des prismes le long du guide.
- La figure 5 est une vue détaillant la forme d'un prisme.
- La figure 6 schématise le chemin suivi par un rayon issu d'une première source lumineuse.

Le cas représenté aux différentes figures est particulièrement adapté à une implantation dans un projecteur à l'avant d'un véhicule automobile. Ainsi que représenté aux figures 2 et 3, le guide 1 ici proposé peut par exemple épouser le contour d'un projecteur qui peut intégrer d'autres fonctions d'éclairage. Le guide 1 est dit linéaire en ce sens qu'il possède une forme allongée définie par une direction longitudinale 7 suivant une ligne géométrique variable selon la configuration choisie. Le guide 1 peut être rectiligne, suivre un profil curviligne convexe comme la forme galbée illustrée ou suivre des courbes différentes suivant sa longueur.

Le guide 1 peut être de section circulaire de sorte à adopter une enveloppe cylindrique ou avoir toute autre section (elliptique, carrée ou ovale par exemple). Des polymères transparents conviennent non limitativement pour sa réalisation, tels que du polycarbonate ou du PMMA (pour polymétacrylate de méthyle).

Dans le cas des figures 2 et 3, on notera le décalage angulaire important entre la direction d'émission d'une première source 2 et d'une deuxième source 3. Ce décalage fait que la direction d'émission d'une des sources (ici la source 2) est plus éloignée de l'axe optique 17 (correspondant à la direction moyenne de projection souhaitée pour le faisceau sortant du guide 1) que la direction d'émission de l'autre source (ici la source 3).

Le dispositif de l'invention comporte des sources lumineuses 2,3 évoquées précédemment. Au moins l'une des sources lumineuses 2,3 peut être constituée d'une ou plusieurs diodes électroluminescentes (LED).

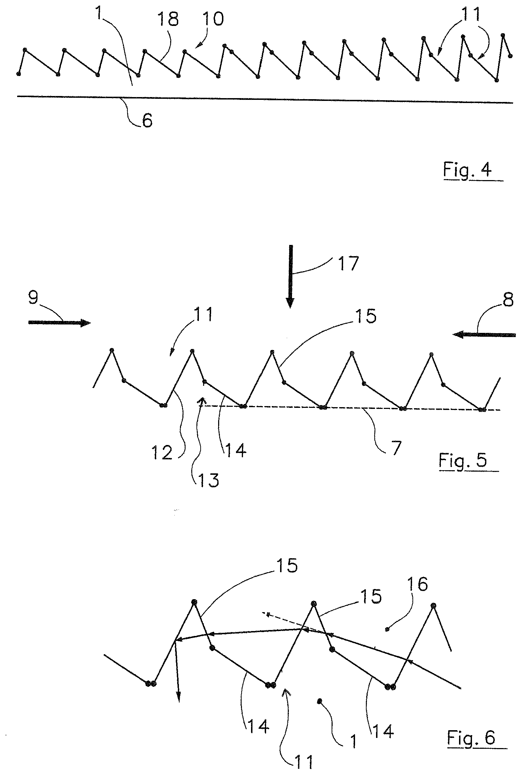

Une première source 2, est placée au voisinage immédiat d'une première extrémité 4 du guide 1. La coopération entre le guide 1 et la source 2 est telle que des rayons lumineux émis par la source 2 entrent dans le guide 1 pour s'y propager sensiblement suivant la direction longitudinale 7 du guide 1. Le sens du premier flux ainsi produit par la source 2 dans le guide 1 est repéré 8 en figure 5.

De façon similaire la deuxième source 3 coopère avec une deuxième extrémité 5 du guide 1. Un deuxième flux se propage dans le guide 1 avec le sens repéré 9 en figure 5.

Le guide 1 comporte en outre deux faces opposées s'étendant suivant la longueur du guide. Une des faces est une face de sortie 6 visible en figure 4 par exemple et assurant la sortie de rayons lumineux après réflexion dans le guide 1, de sorte à former un faisceau de sortie, sensiblement suivant l'axe optique 17 visible en figures 2 et 3.

La face de sortie 6 peut être de conception courante. Elle peut être lisse ou comporter des stries pour modifier la direction des rayons en sortie du guide 1.

L'autre face, dite deuxième face 10, assure la réflexion des rayons issus des flux lumineux vers la face de sortie 6. La réflexion est produite par l'emploi de prismes placés successivement et avantageusement sans espace intermédiaire le long de la deuxième face 10.

Plus précisément, en partant de la première extrémité 4 et en remontant dans le guide 1 dans le sens 8, une portion de la deuxième face 10 comporte des prismes complexes. On entend par là que ces prismes n'ont pas un profil triangulaire comme dans un cas général. Ainsi, les prismes complexes comportent selon l'invention :
- un premier coté 12 apte à assurer une réflexion de rayons du premier flux vers la face de sortie. Un exemple de premier côté 12 est donné aux figures 4 à 6 avec la forme d'un pan, c'est-à-dire d'une surface plane. Le cas n'est pas limitatif et le premier côté pourrait avoir un profil curviligne, concave ou être composé de plusieurs parties sous forme de pans ou de profils curvilignes concaves ou convexes. Le chemin de rayons impactant et réfléchis par le premier côté est illustré en figure 6.
- un deuxième côté 13 situé plus vers la première source 2 que le premier côté 12 du prisme 11 considéré. Ce côté du prisme 11 est spécifique en ce qu'il comporte plusieurs parties ayant une fonction optique déterminée. Ainsi, une première partie présente un premier pan 14 servant à la réflexion de rayons issus de la deuxième source 3 vers la face de sortie 6. Une deuxième partie du deuxième côté présente un deuxième pan 15. Dans la pratique, ce deuxième pan 15 augmente la hauteur du prisme 11 de sorte à s'inscrire sur le chemin de rayons issus de la première source 2 et qui, normalement, sortiraient définitivement du guide 1. Plus précisément, la figure 6 illustre en pointillé le chemin que suivrait un tel rayon sous le deuxième pan 15. Le chemin effectivement suivi grâce au pan 15 est visible en traits pleins. On note que le rayon sort d'abord du guide pour se propager dans le milieu extérieur 16 avant de rentrer dans le prisme 11 par le deuxième pan 15. Le changement de milieu dévie le rayon par réfraction. Une deuxième réfraction se produit lorsque le rayon ressort du prisme 11, entraînant une autre déviation, toujours orientée vers l'intérieur du guide. Au total le passage du rayon lumineux dans la partie du prisme comportant le deuxième pan 15 le redresse vers l'intérieur du guide. Un prisme 11 suivant permet alors sa réflexion vers la face de sortie 6, par le premier côté 12.

Avantageusement, l'angle formé entre le premier pan 14 et le deuxième pan 15 est compris entre 90° et 180° de sorte à être obtus.

Par ailleurs, les angles du premier pan 14 et du premier côté 12 sont conçus de sorte à orienter les rayons réfléchis selon la direction de sortie désirée.

Dans le cas des figures, le deuxième pan 15 et le pan constituant le premier côté se rejoignent au sommet du prisme complexe 11. Avantageusement, les prismes 11 s'enchaînent sans espace intermédiaire de sorte que le premier pan 14 d'un prisme suit immédiatement le premier côté 12 d'un prisme adjacent.

Néanmoins, il peut y avoir des espaces intermédiaires entre au moins deux prismes 11 consécutifs, par exemple des zones planes entre les pans des prismes 11 consécutifs.

La distance entre le début du premier côté 12 d'un prisme et le début du premier côté 12 d'un prisme adjacent correspond au pas de prisme.

Suivant le mode de réalisation préféré visible en figure 4, la hauteur du deuxième pan 15 des primes complexes est variable. Particulièrement, cette hauteur diminue progressivement (la variation peut être linéaire), depuis une hauteur maximale au niveau de la première extrémité 4 jusqu'à une valeur minimale. Cette dernière peut être nulle.

A titre indicatif, on peut choisir des paramètres tels que l'angle du plan 15 est de 82°, les angles des pans 12 et 14 sont évolutifs et varient en fonction notamment du profil du guide de lumière. Par exemple, les hauteurs de prismes varient de 0,17mm à 0,84mm avec un pas de prisme d'environ 1mm. Ces valeurs indicatives peuvent être ajustées de plus ou moins 20%. Par ailleurs, il est souhaitable que la progressivité de la croissance de la hauteur des deuxièmes pans 15 soit sans discontinuité, c'est-à-dire sans rupture nette.

Toujours en référence à la figure 4, la deuxième face 10 du guide 1 peut comporter une deuxième portion suivant sa longueur dans laquelle des prismes 18 sont formés en succession, avec un profil sensiblement triangulaire. On entend par là qu'ils ne forment chacun qu'un dioptre sur chacun de leurs deux côtés. Dans le cas illustré, les deux cotés sont des pans, c'est-à-dire des surfaces planes. Il pourrait aussi s'agir de côtés adaptant un profil curviligne concave ou convexe.

Les prismes 18 assurent une grande partie de la réflexion des rayons du flux issu de la deuxième source 3, par leur coté situé à l'opposé de ladite source 3.

Avantageusement, les prismes 18 s'enchaînent le long du guide sans espace intermédiaire si bien que le premier côté d'un prisme 18 suit immédiatement le deuxième côté d'un prisme adjacent. Néanmoins, il peut y avoir des espaces intermédiaires entre au moins deux prismes 18 consécutifs, par exemple des zones planes entre les pans des prismes 18 consécutifs.

Avantageusement, il n'y a pas de discontinuité de forme et de dimension entre les deux positions de prismes 11, 18 précédemment décrites.

La figure 4 montre en effet que la décroissance de la hauteur des prismes complexes 11, jusqu'à une valeur nulle de hauteur de deuxième pan 15, permet de raccrocher les deux portions sans rupture. Par conséquent, cette zone de transition ne produit pas de discontinuité visuelle tant en sources 2, 3 allumés qu'en source 2, 3 éteintes.

Préférentiellement, on utilise un dispositif de l'invention dont le guide 1 est significativement incurvé vers une extrémité et on place les prismes complexes 11 de ce coté du guide, pour profiter de l'effet de réfraction du deuxième pan 15 dans cette zone fort décalée de l'axe optique 17.

Le cas illustré n'est néanmoins pas limitatif de l'invention. Les deux zones extrémités du guide 1 peuvent être galbées de manière similaire. De même, on peut réaliser des prismes complexes sur toute la longueur du guide 1 avec une portion où les deuxièmes pans 15 servent à la déviation des rayons de la première source 2 comme précédemment et une portion où les deuxième pans 15 servent à la déviation des rayons de la deuxième source 3.

Par exemple, un cas non illustré consiste à former un guide sous forme globale d'une portion d'anneau avec des sources 2, 3 situées chacune à une extrémité de la portion d'anneau. La portion d'anneau peut notamment représenter un secteur angulaire de plus de 270°. Le plan médian de cette portion d'anneau peut avoir une inclinaison comprise entre 0° et 90° par rapport à l'axe optique.

L'invention n'est pas limitée aux modes de réalisation précédemment décrits mais s'étend à tous modes de réalisation conformes aux revendications.

### REFERENCES

- 1.: guide optique
- 2.: première source de lumière
- 3.: deuxième source de lumière
- 4.: première extrémité
- 5.: deuxième extrémité
- 6.: face de sortie
- 7.: direction longitudinale
- 8.: sens du premier flux lumineux
- 9.: sens du deuxième flux lumineux
- 10.: deuxième face
- 11.: prisme complexe
- 12.: premier côté du prisme
- 13.: deuxième côté du prisme
- 14.: premier pan
- 15.: deuxième pan
- 16.: milieu extérieur
- 17.: axe optique
- 18.: prisme

## Revendications

1. Guide optique (1) linéaire pour dispositif d'éclairage et/ou de signalisation, comprenant :
- une première extrémité (4) et une deuxième extrémité (5) aptes à admettre dans le guide (1) respectivement un premier flux lumineux et un deuxième flux lumineux ;
- une face de sortie (6) d'un faisceau lumineux ;
- une deuxième face (10), opposée à la face de sortie (6), comprenant une pluralité de prismes se succédant suivant une direction longitudinale (7) du guide, et configurée pour réfléchir des rayons du premier flux lumineux et du deuxième flux lumineux vers la face de sortie (6),
au moins un des prismes étant un prisme complexe (11) dont le profil n'est pas triangulaire qui comprend un premier côté configuré pour réfléchir les rayons du premier flux lumineux vers la face de sortie (6) et un deuxième côté comprenant deux pans avec :
- un premier pan (14) configuré pour réfléchir des rayons du deuxième flux lumineux vers la face de sortie (6),
- un deuxième pan (15) configuré pour dévier des rayons du premier flux lumineux vers l'intérieur du guide, le premier pan (14) et le deuxième pan (15) formant un angle obtus rentrant et étant directement jointifs, le deuxième pan (15) étant situé au dessus du premier pan (14) en direction de l'extérieur du guide.

2. Guide (1) selon la revendication précédente comportant une pluralité de prismes complexes (11) se succédant le long d'une portion de la longueur du guide (1) s'étendant à partir de la première extrémité (4) du guide.

3. Guide (1) selon la revendication précédente dans lequel la hauteur du deuxième pan (15) des prismes complexes (11) est croissante en direction de la première extrémité (4).

4. Guide (1) selon la revendication précédente dans lequel la croissance de la hauteur du deuxième pan (15) des prismes complexes (11) est linéaire.

5. Guide (1) selon l'une des deux revendications précédentes dans lequel la croissance de la hauteur du deuxième pan (15) des prismes complexes (11) débute d'une valeur de hauteur nulle.

6. Guide (1) selon l'une des quatre revendications précédentes dans lequel le ratio de la hauteur du deuxième pan (15) sur la hauteur du premier pan (14) des prismes complexes (11) est croissant en direction de la première extrémité (4).

7. Guide (1) selon l'une des revendications précédentes comportant une portion de la longueur du guide (1) s'étendant à partir de la deuxième extrémité (5) et comprenant des prismes (18) triangulaires se succédant le long de ladite portion.

8. Guide (1) selon les deux revendications précédentes en combinaison dans lequel la portion de la longueur du guide (1) s'étendant à partir de la deuxième extrémité (5) et la portion de la longueur du guide (1) s'étendant à partir de la première extrémité (4) du guide (1) se rejoignent sans discontinuité de variation de hauteur des prismes (11, 18).

9. Guide (1) selon l'une des revendications précédentes configuré pour générer un faisceau lumineux suivant un axe optique (17) et dans lequel l'angle formé entre l'axe optique (17) et la direction d'entrée dans le guide (1) du premier flux lumineux est supérieur à l'angle formé entre l'axe optique (17) et la direction d'entrée dans le guide (1) du deuxième flux lumineux.

10. Guide (1) selon la revendication précédente dans lequel l'angle formé entre l'axe optique (17) et la direction d'entrée dans le guide (1) du premier flux lumineux est supérieur à 90°.

11. Dispositif d'éclairage et/ou de signalisation notamment pour véhicule automobile comportant un guide (1) selon l'une des revendications précédentes et deux sources lumineuses chacune placée au voisinage d'une parmi la première extrémité (4) et la deuxième extrémité (5) du guide (1).

## Patentansprüche

1. Linearer Lichtleiter (1) für eine Beleuchtungs- und/oder Signalgebungsvorrichtung, bestehend aus :
- ein erstes Ende (4) und ein zweites Ende (5), die geeignet sind, einen ersten Lichtstrom bzw. einen zweiten Lichtstrom in die Führung (1) einzulassen;
- eine Austrittsfläche (6) eines Lichtstrahls ;
- eine zweite Fläche (10), die der Austrittsfläche (6) gegenüberliegt und eine Vielzahl von Prismen umfasst, die entlang einer Längsrichtung (7) der Führung aufeinander folgen und so konfiguriert sind, dass sie Strahlen des ersten Lichtstroms und des zweiten Lichtstroms zur Austrittsfläche (6) hin reflektieren,
wobei mindestens eines der Prismen ein komplexes Prisma (11) ist, dessen Profil nicht dreieckig ist, das eine erste Seite aufweist, die so gestaltet ist, dass sie die Strahlen des ersten Lichtstroms zur Austrittsfläche (6) hin reflektiert, und eine zweite Seite, die zwei Platten mit :
- eine erste Platte (14), die so konfiguriert ist, dass sie die Strahlen des zweiten Lichtstroms zur Austrittsfläche (6) hin reflektiert,
- eine zweite Platte (15), die so konfiguriert ist, dass sie Strahlen des ersten Lichtstroms in das Innere der Führung ablenkt, wobei die erste Platte (14) und die zweite Platte (15) einen einspringenden stumpfen Winkel bilden und direkt aneinander stoßen, wobei die zweite Platte (15) oberhalb der ersten Platte (14) zur Außenseite der Führung hin angeordnet ist.

2. Linearer Lichtleiter (1) nach dem vorstehenden Anspruch, umfassend eine Vielzahl von komplexen Prismen (11), die nacheinander entlang eines Teils der Länge dem linearen Lichtleiter (1) angeordnet sind, der sich vom ersten Ende (4) dem linearen Lichtleiter erstreckt.

3. Linearer Lichtleiter (1) nach dem vorstehenden Anspruch, bei der die Höhe der zweiten Platte (15) der komplexen Prismen (11) zum ersten Ende hin zunimmt (4).

4. Linearer Lichtleiter (1) nach dem vorstehenden Anspruch, bei der das Höhenwachstum der zweiten Platte (15) der komplexen Prismen (11) linear ist.

5. Linearer Lichtleiter (1) nach einem der beiden vorhergehenden Ansprüche, in dem das Höhenwachstum der zweiten Platte (15) der komplexen Prismen (11) bei einem Wert von Null Höhe beginnt.

6. Linearer Lichtleiter (1) nach einem der vier vorhergehenden Ansprüche, bei der das Verhältnis der Höhe der zweiten Platte (15) zur Höhe der ersten Platte (14) von komplexen Prismen (11) zum ersten Ende hin zunimmt (4).

7. Linearer Lichtleiter (1) gemäß einem der vorhergehenden Ansprüche, die einen Teil der Länge dem linearen Lichtleiter (1) umfasst, der sich vom zweiten Ende (5) aus erstreckt und dreieckige Prismen (18) umfasst, die entlang dieses Teils aufeinander folgen.

8. Linearer Lichtleiter (1) nach den beiden vorhergehenden Ansprüchen in Kombination, bei der der Teil der Länge dem linearen Lichtleiter (1), der sich vom zweiten Ende (5) erstreckt, und der Teil dem linearen Lichtleiter (1), der sich vom ersten Ende (4) dem linearen Lichtleiter (1) erstreckt, ohne Diskontinuität der Höhenveränderung der Prismen (11, 18) aufeinander treffen.

9. Linearer Lichtleiter (1) nach einem der vorhergehenden Ansprüche, die so konfiguriert ist, dass sie einen Lichtstrahl entlang einer optischen Achse (17) erzeugt, und bei der der Winkel, der zwischen der optischen Achse (17) und der Richtung des Eintritts des ersten Lichtstroms in die Führung (1) gebildet wird, größer ist als der Winkel, der zwischen der optischen Achse (17) und der Richtung des Eintritts des zweiten Lichtstroms in den Lichtleiter (1) gebildet wird.

10. Linearer Lichtleiter (1) nach dem vorstehenden Anspruch, bei der der Winkel, der zwischen der optischen Achse (17) und der Eintrittsrichtung des ersten Lichtstroms in die Führung (1) gebildet wird, größer als 90° ist.

11. Beleuchtungs- und/oder Signalgebungsvorrichtung, insbesondere für Kraftfahrzeuge, mit einem linearen Lichtleiter (1) gemäß einem der vorstehenden Ansprüche und zwei Lichtquellen, die jeweils in der Nähe eines der ersten Enden (4) und des zweiten Endes (5) dem linearen Lichtleiter (1) angeordnet sind.

## Claims

1. Linear lightguide (1) for lighting and/or signaling devices, comprising :
- a first end (4) and a second end (5) suitable for admitting a first luminous flux and a second luminous flux respectively into the guide (1);
- an exit face (6) of a light beam ;
- a second face (10), opposite the exit face (6), comprising a plurality of prisms following one another in a longitudinal direction (7) of the guide, and configured to reflect rays of the first luminous flux and the second luminous flux towards the exit face (6),
at least one of the prisms being a complex prism (11) whose profile is not triangular, which comprises a first side configured to reflect the rays of the first luminous flux towards the exit face (6) and a second side comprising two panels with :
- a first panel (14) configured to reflect rays of the second luminous flux towards the exit face (6),
- a second panel (15) configured to deflect rays of the first luminous flux into the guide, the first panel (14) and the second panel (15) forming a reentrant obtuse angle and being directly joined, the second panel (15) being located above the first panel (14) towards the outside of the guide.

2. A lightguide (1) according to the preceding claim comprising a plurality of complex prisms (11) in succession along a portion of the length of the guide (1) extending from the first end (4) of the guide.

3. A lightguide (1) according to the previous claim in which the height of the second panel (15) of the complex prisms (11) increases towards the first end (4).

4. A lightguide (1) according to the previous claim in which the growth in height of the second panel (15) of the complex prisms (11) is linear.

5. A lightguide (1) according to one of the two preceding claims in which the growth in height of the second panel (15) of the complex prisms (11) starts from a value of zero height.

6. A lightguide (1) according to one of the four preceding claims in which the ratio of the height of the second panel (15) to the height of the first panel (14) of complex prisms (11) is increasing towards the first end (4).

7. A lightguide (1) according to one of the preceding claims comprising a portion of the length of the lightguide (1) extending from the second end (5) and comprising triangular prisms (18) succeeding one another along said portion.

8. A lightguide (1) according to the two preceding claims in combination in which the portion of the length of the lightguide (1) extending from the second end (5) and the portion of the length of the lightguide (1) extending from the first end (4) of the lightguide (1) meet without discontinuity of variation in height of the prisms (11, 18).

9. A lightguide (1) according to one of the preceding claims configured to generate a light beam along an optical axis (17) and in which the angle formed between the optical axis (17) and the direction of entry into the lightguide (1) of the first luminous flux is greater than the angle formed between the optical axis (17) and the direction of entry into the lightguide (1) of the second luminous flux.

10. A lightguide (1) according to the preceding claim in which the angle formed between the optical axis (17) and the direction of entry into the lightguide (1) of the first luminous flux is greater than 90°.

11. Lighting and/or signaling device, in particular for a motor vehicle, comprising a lightguide (1) according to one of the preceding claims and two light sources each placed in the vicinity of one of the first end (4) and the second end (5) of the lightguide (1).
